# FASCICULE DE BREVET EUROPEEN

(11) **EP 3 880 490 B1**
(45) Date de publication et mention de la délivrance du brevet: **22.02.2023**
(21) Numéro de dépôt: 19832167.1
(22) Date de dépôt: 14.11.2019
(51) Int. Cl.: B60C 1/00, B60C 11/00, B60C 11/04, B60C 11/03

(54) **PNEUMATIQUE POURVU D'UNE BANDE DE ROULEMENT**
MIT EINER LAUFFLÄCHE VERSEHENER REIFEN
TYRE PROVIDED WITH A TREAD

(30) Priorité: 15.11.2018 FR 1860545
(43) Date de publication de la demande: 22.09.2021
(73) Titulaire: COMPAGNIE GENERALE DES ETABLISSEMENTS MICHELIN, 63040 Clermont-Ferrand (FR)
(72) Inventeur: CABIOCH, Jean-Luc, 63040 CLERMONT-FERRAND CEDEX 9 (FR); JULIEN, Stéphanie, 63040 CLERMONT-FERRAND CEDEX 9 (FR)
(74) Mandataire: Wroblewski, Nicolas Paul André
(86) Numéro de dépôt international: PCT/FR2019/052704
(87) Numéro de publication internationale: WO 2020/099791

(56) Documents cités:
- WO-A1-2009/123611
- WO-A1-2010/133492
- WO-A1-2013/092524
- WO-A1-2015/016388
- WO-A1-2017/104781
- WO-A1-2017/170654
- WO-A1-2018/078306
- JP-A- H04 118 305
- US-A1- 2016 075 183

## Description

### Domaine technique

La présente invention est relative à des pneumatiques, en particulier à des pneumatiques d'avion, ainsi qu'à leur bande de roulement.

### Etat de la technique

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Les expressions « radialement », « axialement » et « circonférentiellement » signifient respectivement « selon la direction radiale », « selon la direction axiale » et « selon la direction circonférentielle ». Les expressions « radialement intérieur, respectivement radialement extérieur» signifient « plus proche, respectivement plus éloigné, de l'axe de rotation du pneumatique, selon la direction radiale, que ». Les expressions « axialement intérieur, respectivement axialement extérieur» signifient « plus proche, respectivement plus éloigné, du plan équatorial du pneumatique, selon la direction axiale, que », le plan équatorial du pneumatique étant le plan perpendiculaire à l'axe de rotation du pneumatique passant par le milieu de la bande de roulement du pneumatique.

Des pneumatiques connus sont divulgués dans les documents WO 2017/104781 A,

WO 2017/170654 A, WO 2009/123611 A et WO 2010/133492 A.

La bande de roulement est la partie du pneumatique, destinée à entrer en contact avec un sol par l'intermédiaire d'une surface de roulement radialement extérieure: c'est la partie usante du pneumatique. Dans le cas d'un pneumatique pour avion, la bande de roulement, comprenant au moins une composition de caoutchouc, le plus souvent à base de caoutchouc naturel et de noir de carbone, ces deux éléments principaux conférant à la composition de caoutchouc les propriétés mécaniques nécessaires aux conditions d'usage d'un pneumatique pour avion.

Par ailleurs, la bande de roulement est généralement constituée d'éléments en relief séparés par des creux (ou rainure ou encore sillons). Dans le cas d'un pneumatique pour avion, les éléments en relief sont le plus souvent des nervures circonférentielles continues sur toute la circonférence du pneumatique et séparées par des creux ou sillons circonférentiels.

Qu'ils soient destinés à équiper des avions ou autres types de véhicules, les pneumatiques sont soumis à différents types d'agressions, de nature physique et/ou chimique. En particulier, l'ozone est connu comme ayant des effets néfastes sur les articles en caoutchouc, produisant typiquement à la surface de ces articles, un glaçage et/ou des fissurations. Les surfaces particulièrement concernées sont les flancs externes de pneumatique, mais également les fonds de sillons de la bande de roulement. La portion radialement extérieur de la bande de roulement est quant à elle peu ou pas concernée par cette problématique dans la mesure où elle constitue la partie usante du pneumatique.

Afin de lutter contre ces effets néfastes, on utilise classiquement des cires anti-ozone bien connues de l'homme du métier. Toutefois, lorsque l'exposition à l'ozone est particulière importantes, l'utilisation de cire anti-ozone peut ne pas s'avérer suffisante.

Il existe donc également un besoin de minimiser ces phénomènes, en particulier sans pénaliser les autres propriétés du pneumatique, en particulier de la bande de roulement, et encore plus particulièrement les propriétés attendues d'un pneumatique d'avion.

En effet, de manière connue, un pneumatique d'avion doit résister à des conditions de pression, de charge et de vitesse élevées, et doit satisfaire également des exigences de résistance à l'usure et d'endurance.

Les bandes de roulement de pneumatique d'avion sont utilisées depuis de nombreuses années et doivent présenter des propriétés mécaniques leur permettant de résister aux conditions d'usure très particulières des pneumatiques d'avion. En effet ces pneumatiques sont soumis à de très grandes variations de température et de vitesse, en particulier à l'atterrissage où ils doivent passer d'une vitesse nulle à une très grande vitesse, provoquant un échauffement et une usure considérables. Ces conditions d'usure particulières ne concernent pas d'autres types de pneumatiques tels que les pneumatiques de véhicules de tourisme, poids lourds, génie civil ou hors sol.

Usuellement, les compositions de bande de roulement de pneumatiques d'avion comprennent exclusivement du caoutchouc naturel, ce dernier permettant de garantir un équilibre optimal entre la résistance à l'usure et la stabilité thermique du pneumatique.

Au vu de ce qui précède, il existe un réel besoin de disposer de bande de roulement de pneumatique présentant une résistance à l'ozone améliorée, sans pénaliser les autres propriétés de la bande de roulement. Ce besoin est d'autant plus important pour les bandes de roulement de pneumatique d'avion qui sont soumis à des sollicitations extrêmement sévères et très spécifiques.

Poursuivant ses recherches, la Demanderesse a mis au point un pneumatique comprenant une bande de roulement en au moins portions, une radialement extérieure et une radialement intérieure, et dont la composition de la portion radialement, incluant les fonds de sillon de la bande de roulement, est constituée d'une composition de caoutchouc spécifique.

Ainsi, la présente invention a notamment pour objet un pneumatique pourvu d'une bande de roulement, dans lequel la bande de roulement présente des sillons circonférentiels ayant une profondeur P, et comprend une portion radialement extérieure ayant une épaisseur E_{E} et une portion radialement intérieure ayant une épaisseur E_{I}, la portion radialement intérieure étant constituée d'une composition à base de :
- une matrice élastomérique comprenant au moins élastomère diénique,
- de 0,2 à 10 pce d'au moins un sel d'un métal alcalin, alcalino-terreux ou lanthanide,
- au moins une charge renforçante, et
- un système de réticulation,

dans lequel la composition de la portion radialement extérieure (21) de la bande de roulement est différente de la composition de la portion radialement intérieure (22) de la bande de roulement, et
dans lequel le sel d'un métal alcalin, alcalino-terreux ou lanthanide est un acétylacétonate d'un métal alcalin, alcalino-terreux ou lanthanide.

Dans la présente, sauf indications contraires, lorsqu'il est fait mention de « la composition » ou « la composition conforme à l'invention », il est fait référence à la composition de la portion radialement intérieure de la bande de roulement du pneumatique selon l'invention.

### I- DÉFINITIONS

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on décrit un intervalle de valeurs par l'expression "de a à b", on décrit également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. De préférence par majoritaire, on entend présent à plus de 50%, de préférence plus de 60%, 70%, 80%, 90%, et plus préférentiellement le composé « majoritaire » représente 100%.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Les températures de transition vitreuse (Tg) des élastomères sont déterminées à l'aide d'un calorimètre différentiel ("differential scanning calorimeter"), selon la norme ASTM E1356-08 qui date de 2014.

### II- BREVE DESCRIPTIONS DES FIGURES

- La figure 1 représente un schéma d'une demi-vue en coupe du sommet d'un pneumatique, dans un plan radial (YZ) passant par l'axe de rotation (YY') du pneumatique.
- La figure 2 représente un schéma d'une coupe d'un sillon de la bande de roulement d'un pneumatique dans un plan radial (YZ) passant par l'axe de rotation (YY') du pneumatique.

### III- DESCRIPTION DE L'INVENTION

### III-I Bande de roulement et pneumatique

De manière connue, la bande de roulement d'un pneumatique, qu'il soit destiné à équiper un véhicule de tourisme ou autre, comporte une surface de roulement destinée à être en contact avec le sol lorsque le pneumatique roule. La bande de roulement est pourvue d'une sculpture comprenant notamment des éléments de sculpture ou blocs élémentaires délimités par diverses rainures principales, longitudinales ou circonférentielles, transversales ou encore obliques, les blocs élémentaires pouvant en outre comporter diverses incisions ou lamelles plus fines.

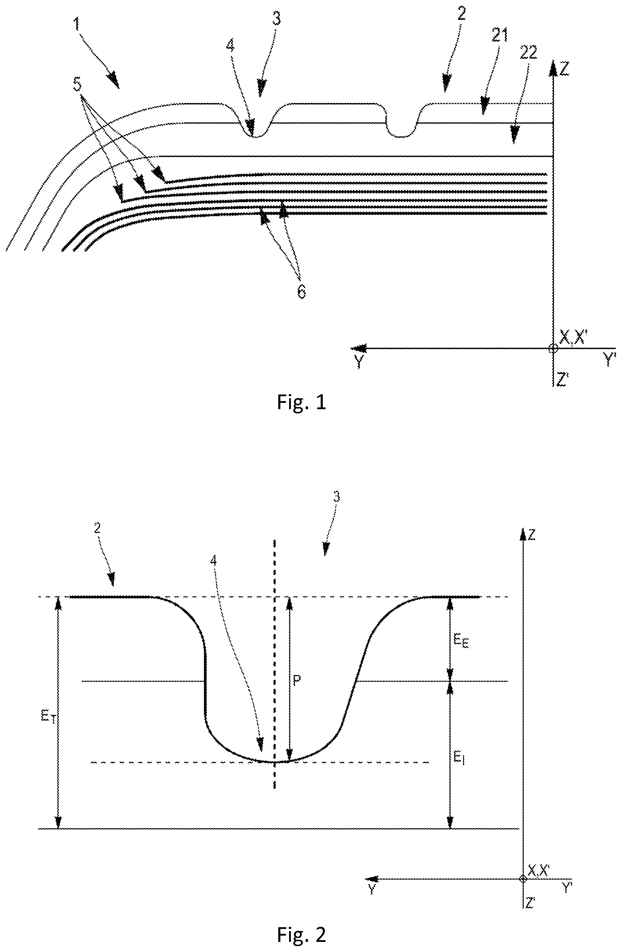

De façon générale, comme montré sur la Figure 1 (échelle non respectée pour en faciliter la lecture), un pneumatique 1 comprend une bande de roulement 2, destinée à venir en contact avec le sol par l'intermédiaire d'une surface de roulement, et reliée par l'intermédiaire de deux flancs à deux bourrelets, destinés à assurer une liaison mécanique entre le pneumatique et la jante sur laquelle il est monté.

Un pneumatique radial comprend plus particulièrement une armature de renforcement, comprenant une armature de sommet 5, radialement intérieure à la bande de roulement, et une armature de carcasse 6, radialement intérieure à l'armature de sommet 5.

La bande de roulement 2 comprend des sillons circonférentiels 3, dont le fond 4 est généralement et préférentiellement sensiblement parallèle à la surface extérieure de la bande de roulement 2.

La bande de roulement comprend une portion radialement extérieure 21 ayant une épaisseur E_{E} et une portion radialement intérieure 22 ayant une épaisseur E_{I},

La Figure 2 montre un agrandissement d'un sillon circonférentiel 3, où P représente la profondeur du sillon circonférentiel 3, E_{E} représente l'épaisseur de la portion radialement extérieure 21 de la bande de roulement 2, E_{I} représente l'épaisseur de la portion radialement intérieure 22 de la bande de roulement 2 et E_{T} l'épaisseur totale de la bande de roulement 2.

La bande de roulement 2 du pneumatique 1 selon l'invention peut comprendre plusieurs portions (ou couches), par exemple deux, superposées dans la direction radiale. En d'autres termes, les portions (ou couches) sont parallèles, au moins sensiblement, entre elles, ainsi qu'au plan tangentiel (ou longitudinal), plan définit comme étant orthogonal à la direction radiale.

La bande de roulement du roulement 2 du pneumatique 1 selon l'invention peut ainsi comprendre au moins une portion radialement intérieure 22 et une portion radialement extérieure 21, la composition conforme à l'invention étant présente dans une portion radialement intérieure 22 de la bande de roulement 2 du pneumatique 1 selon l'invention. Avantageusement, la bande de roulement 2 du pneumatique 1 selon l'invention comprend une portion radialement extérieure 21 et une seule portion radialement intérieure 22. Dans ce cas, l'épaisseur totale E_{T} de la bande de bande de roulement 2 est égale à la somme des épaisseurs E_{E} et E_{I}, Avantageusement, la portion radialement intérieure 22 est donc adjacente à la portion radialement extérieure 21.

Avantageusement, l'épaisseur E_{E} de la portion radialement extérieure 21 est strictement inférieure à P et l'épaisseur E, de la portion radialement intérieure 22 est strictement supérieure à la différence de la profondeur P par l'épaisseur E_{E}. De cette manière, lorsque la composition de la portion radialement extérieure 21 de la bande de roulement 2 est différente de la composition de la portion radialement intérieure 22 de la bande de roulement2, la composition du fond de sillon 4 des sillons circonférentiels 3 est la composition de la portion radialement intérieure 22 de la bande de roulement 2.

De préférence :
- la profondeur P des sillons circonférentiels 3 est comprise dans un domaine allant de 7 à 18 mm, de préférence de 10 à 15 mm,
- l'épaisseur E_{E} de la portion radialement extérieure 21 est comprise dans un domaine allant de 6 à 17 mm, de préférence de 9 à 14mm,
- l'épaisseur E_{I} de la portion radialement intérieure 22 est comprise dans un domaine allant de 4 à 15 mm, de préférence de 7 à 9 mm.

La composition de la portion radialement extérieure 21 de la bande de roulement 2 est différente de la composition de la portion radialement intérieure 22 de la bande de roulement 2. La bande de roulement peut également comprendre deux compositions différentes entre elles mais toutes deux conformes à la présente invention, l'une étant présente dans une portion radialement extérieure de la bande de roulement, l'autre dans une portion radialement intérieure.

La présente invention concerne particulièrement, sans être limitatif, des pneumatiques destinés à équiper des véhicules à moteur de type tourisme, SUV ("Sport Utility Vehicles"), ou deux roues (notamment motos), ou encore des véhicules industriels choisis parmi camionnettes, « Poids-lourd » - c'est-à-dire métro, bus, engins de transport routier (camions, tracteurs, remorques, et autres) ou encore des avions, des engins de génie civil, agraire, ou de manutention.

L'invention concerne les pneumatiques tant à l'état cru (c'est à dire, avant cuisson) qu'à l'état cuit (c'est à dire, après réticulation ou vulcanisation).

De manière particulière avantageuse, le pneumatique selon l'invention est un pneumatique d'avion.

L'armature de carcasse d'un pneumatique d'avion comprend généralement une pluralité de couches de carcasse 6 s'étendant entre les deux bourrelets et réparties entre une première et une deuxième famille.

La première famille est constituée par des couches de carcasse, s'enroulant, dans chaque bourrelet, de l'intérieur vers l'extérieur du pneumatique, autour d'un élément de renforcement circonférentiel, appelé tringle, pour former un retournement dont l'extrémité est généralement radialement extérieure au point le plus radialement extérieur de la tringle. Le retournement est la portion de couche de carcasse comprise entre le point le plus radialement intérieur de la couche de carcasse et son extrémité. Les couches de carcasse de la première famille sont les couches de carcasse les plus proches de la cavité intérieure du pneumatique et donc les plus axialement intérieures, dans les flancs.

La deuxième famille est constituée par des couches de carcasse s'étendant, dans chaque bourrelet, de l'extérieur vers l'intérieur du pneumatique, jusqu'à une extrémité généralement radialement intérieure au point le plus radialement extérieur de la tringle. Les couches de carcasse de la deuxième famille sont les couches de carcasse les plus proches de la surface extérieure du pneumatique et donc les plus axialement extérieures, dans les flancs.

Usuellement, les couches de carcasse de la deuxième famille sont positionnées, sur toute leur longueur, à l'extérieur des couches de carcasse de la première famille, c'est-à-dire qu'elles enveloppent, en particulier, les retournements des couches de carcasse de la première famille. Chaque couche de carcasse de la première et de la deuxième famille est constituée d'éléments de renforcement parallèles entre eux, faisant, avec la direction circonférentielle, un angle compris entre 80° et 100°.

Selon l'invention, le pneumatique peut comprendre un nombre de couches carcasse 6 allant de 2 à 12, de préférence de 5 à 10.

Les éléments de renforcement des couches de carcasse d'un pneumatique d'avion sont le plus souvent des câbles constitués de filés de filaments textiles, préférentiellement en polyamide aliphatique ou en polyamide aromatique, et caractérisés par leurs propriétés mécaniques en extension. Les éléments de renforcement textiles subissent une traction sur une longueur initiale de 400 mm à une vitesse nominale de 200 mm/min. Tous les résultats sont une moyenne de 10 mesures.

En utilisation, un pneumatique d'avion est soumis à une combinaison de charge et de pression induisant un taux de flexion élevé, typiquement supérieur à 30% (par exemple à 32% ou 35%). Le taux de flexion d'un pneumatique est, par définition, sa déformation radiale, ou sa variation de hauteur radiale, lorsque celui-ci passe d'un état gonflé non chargé à un état gonflé chargé en statique, dans des conditions de pression et de charge telles que définies, par exemple, par la norme de la Tyre and Rim Association ou TRA. Il est défini par le rapport de la variation de la hauteur radiale du pneumatique sur la moitié de la différence entre le diamètre extérieur du pneumatique, mesuré en statique dans un état non chargé gonflé à la pression de référence, et le diamètre maximum de la jante, mesuré sur le rebord de jante. La norme TRA définit en particulier l'écrasement d'un pneumatique d'avion par son rayon écrasé, c'est-à-dire par la distance entre l'axe de la roue du pneumatique et le plan du sol avec lequel le pneumatique est en contact dans les conditions de pression et de charge de référence.

Un pneumatique d'avion est par ailleurs soumis à une pression de gonflage élevée, typiquement supérieure à 9 bars. Ce niveau de pression élevé implique un nombre important de couches de carcasse, car l'armature de carcasse est dimensionnée pour assurer la résistance du pneumatique à ce niveau de pression avec un coefficient de sécurité élevé. A titre d'exemple, l'armature de carcasse d'un pneumatique dont la pression d'usage, telle que recommandée par la norme TRA, est égale à 15 bars, doit être dimensionnée pour résister à une pression égale à 60 bars, dans l'hypothèse d'un coefficient de sécurité égal à 4. Ainsi, selon l'invention, le pneumatique peut avoir une pression de gonflage supérieure à 9 bars, de préférence de 9 à 20 bars.

Les pneumatiques selon la présente invention peuvent être utilisés sur tout type d'avion. Ils sont particulièrement intéressants pour les avions utilisant des pneumatiques à grandes dimensions. En effet, plus la dimension d'un pneumatique d'avion est importante plus l'impact de l'usure à l'atterrissage sur l'usure globale du pneumatique sera important. Ainsi, selon l'invention, le pneumatique peut avoir une dimension supérieure à 18 pouces, de préférence de 20 à 23 pouces.

En utilisation, les sollicitations mécaniques de roulage induisent des cycles de flexion dans les bourrelets du pneumatique, qui s'enroulent sur les rebords de jante. Ces cycles de flexion génèrent en particulier, dans les portions de couches de carcasse situées dans la zone de flexion sur jante, des variations de courbure combinées avec des variations d'allongement des éléments de renforcement des couches de carcasse. Ces variations d'allongement ou déformations, en particulier dans les couches de carcasse les plus axialement extérieures, peuvent avoir des valeurs minimales négatives, correspondant à une mise en compression. Cette mise en compression est susceptible d'induire une rupture par fatigue des éléments de renforcement et donc une dégradation prématurée du pneumatique.

Ainsi, le pneumatique selon l'invention est préférentiellement un pneumatique d'avion qui est soumis lors de son utilisation à une combinaison de charge et de pression induisant un taux de flexion supérieur à 30.

De même, le pneumatique selon l'invention est préférentiellement un pneumatique d'avion comprenant en plus de la bande de roulement, une structure interne comprenant une pluralité de couches de carcasse s'étendant entre les deux bourrelets et réparties entre une première et une deuxième famille, la première famille étant constituée par des couches de carcasse, s'enroulant, dans chaque bourrelet, de l'intérieur vers l'extérieur du pneumatique et la deuxième famille étant constituée par des couches de carcasse s'étendant, dans chaque bourrelet, de l'extérieur vers l'intérieur du pneumatique.

### III-2 Composition de la partie radialement intérieure de la bande de roulement

### III-2-α Matrice élastomérique

La composition de la portion radialement intérieure de la bande de roulement du pneumatique selon l'invention peut contenir un seul élastomère diénique ou un mélange de plusieurs élastomères diéniques.

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Avantageusement, l'élastomère diénique est un élastomère diénique essentiellement insaturé.

On entend particulièrement par élastomère diénique susceptible d'être utilisé dans les compositions conformes à l'invention :
a) tout homopolymère d'un monomère diène, conjugué ou non, ayant de 4 à 18 atomes de carbone ;
b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

A titre de diènes conjugués conviennent les diènes conjugués ayant de 4 à 12 atomes de carbone, en particulier les 1,3-diènes, tels que notamment le 1,3-butadiène et l'isoprène.

A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent par exemple le styrène, l'ortho-, méta-, para-méthylstyrène, le mélange commercial "vinyle-toluène", le para-tertiobutylstyrène.

A titre d'a-monooléfines aliphatiques conviennent notamment les α-monooléfines aliphatiques acycliques ayant de 3 à 18 atomes de carbone.

Préférentiellement, l'élastomère diénique est choisi dans le groupe constitué par les polybutadiènes (BR), les polyisoprènes de synthèse (IR), le caoutchouc naturel (NR), les copolymères de butadiène, les copolymères d'isoprène et leurs mélanges. Les copolymères de butadiène sont préférentiellement choisis dans le groupe constitué par les copolymères de butadiène-styrène (SBR).

On notera que le SBR peut être préparé en émulsion (ESBR) ou en solution (SSBR). Qu'il s'agisse de ESBR ou de SSBR. Parmi les copolymères à base de styrène et de butadiène, en particulier SBR, on peut citer notamment ceux ayant une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%.

Préférentiellement, l'élastomère diénique comprend un coupage de copolymère butadiène-styrène et de polyisoprène.

Par « polyisoprène » (également appelé « élastomère isoprénique »), on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Avantageusement, le copolymère butadiène-styrène est un SBR préparé en solution et présente une teneur en styrène comprise entre 5% et 60%, de préférence de 6% à 24%, en poids par rapport au poids total du copolymère, et une teneur (% molaire) en liaisons -1,2 de la partie butadiénique comprise entre 4% et 75%, de préférence entre 20% et 30%.

L'élastomère diénique, de préférence le copolymère butadiène-styrène, peut être modifié, c'est à dire soit couplé et/ou étoilé, soit fonctionnalisé, soit couplé et/ou étoilé et simultanément fonctionnalisé.

Ainsi, l'élastomère diénique, de préférence le copolymère butadiène-styrène, peut être couplé et/ou étoilé, par exemple au moyen d'un atome silicium ou d'étain qui lie entre elles les chaînes élastomères.

Avantageusement, le copolymère butadiène-styrène est couplé ou étoilé à l'étain.

L'élastomère diénique peut être simultanément ou alternativement fonctionnalisé et comprendre au moins groupe fonctionnel. Par groupe fonctionnel, on entend un groupe comprenant au moins un hétéroatome choisi parmi Si, N, S, O, P. Conviennent particulièrement à titre de groupes fonctionnels ceux comprenant au moins une fonction telle que : le silanol, un alcoxysilane, une amine primaire, secondaire ou tertiaire, cyclique ou non, un thiol, un époxyde.

Avantageusement, dans la composition conforme à l'invention, le taux de copolymère butadiène-styrène est compris dans un domaine allant de 0 à 70 pce et le taux de polyisoprène est compris dans un domaine allant de 30 à 100 pce. Plus préférentiellement encore, dans la composition conforme à l'invention, le taux de copolymère butadiène-styrène est compris dans un domaine allant de 40 à 60 pce et le taux de polyisoprène est compris dans un domaine allant de 40 à 60 pce.

Le taux total de copolymère butadiène-styrène et de polyisoprène dans la composition conforme à l'invention peut être compris dans un domaine allant de 60 à 100 pce, de préférence de 70 à 100 pce. Avantageusement, le taux total de copolymère butadiène-styrène et de polyisoprène dans la composition conforme à l'invention peut être de 100 pce.

### III-2-b Sel d'un métal alcalin, alcalino-terreux ou lanthanide

La composition de la portion radialement intérieure de la bande de roulement du pneumatique selon l'invention comprend de 0,2 à 10 pce d'au moins un sel de métal alcalin, alcalino-terreux ou lanthanide, le sel d'un métal alcalin, alcalino-terreux ou lanthanide étant un acétylacétonate d'un métal alcalin, alcalino-terreux ou lanthanide.

De préférence, le métal alcalin, alcalino-terreux ou lanthanide du sel est choisi dans le groupe constitué par le lithium, le sodium, le potassium, le calcium, le magnésium, le lanthane, le cérium, le praséodyme, le néodyme, le samarium, l'erbium et leurs mélanges. De préférence encore, le sel d'un métal alcalin, alcalino-terreux ou lanthanide est un sel de magnésium ou de néodyme, de préférence de magnésium. En d'autres termes, le sel d'un métal alcalin, alcalino-terreux ou lanthanide est avantageusement un acétylacétonate de magnésium ou de néodyme, de préférence un acétylacétonate de magnésium.

Le taux du sel de métal alcalin, alcalino-terreux ou lanthanide, dans la composition de la portion radialement intérieure de la bande de roulement, peut être compris par exemple dans un domaine allant de 0,5 à 5 pce, de préférence de 1 à 3 pce.

De tels composés sont bien connus comme catalyseurs de polymérisation de polymère (voir par exemple WO 95/03348 et WO 96/03455).

A titre d'exemple de composés disponible dans le commerce, on peut citer l'acétylacétonate de magnésium « NACEM Magnésium » (CAS 68488-07-3) de la société Niho Kagaku Sangyo.

### III-2-c Charge renforçante

La composition de la portion radialement intérieure de la bande de roulement du pneumatique selon l'invention comprend en outre une charge renforçante, connue pour ses capacités à renforcer une composition de caoutchouc utilisable pour la fabrication de pneumatiques.

La charge renforçante peut comprendre du noir de carbone et/ou de la silice. Avantageusement, la charge renforçante comprend majoritairement, de préférence exclusivement, du noir de carbone.

Les noirs utilisables dans le cadre de la présente invention peuvent être tout noir conventionnellement utilisé dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO 2006/069792, WO 2006/069793, WO 2008/003434 et WO 2008/003435.

Avantageusement, le noir de carbone comprend majoritairement, de préférence exclusivement, un noir de carbone présentant une surface spécifique BET supérieure à 80 m²/g, de préférence comprise dans un domaine allant entre 80 et 170m²/g, de préférence encore entre 120 et 145 m²/g.

La surface spécifique BET des noirs de carbone est mesurée selon la norme D6556-10 [méthode multipoints (au minimum 5 points) - gaz : azote - domaine de pression relative P/P0 : 0.1 à 0.3].

Les silices utilisables dans le cadre de la présente invention peuvent être toute silice connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g.

La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1 heure à 160°C - domaine de pression relative p/po : 0.05 à 0.17). La surface spécifique CTAB de la silice est déterminée selon la norme française NF T 45-007 de novembre 1987 (méthode B).

De préférence, la silice présente une surface spécifique BET inférieure à 200 m²/g et/ou une surface spécifique CTAB est inférieure à 220 m²/g, de préférence une surface spécifique BET comprise dans un domaine allant de 125 à 200 m²/g et/ou une surface spécifique CTAB comprise dans un domaine allant de 140 à 170 m²/g.

A titres de silices utilisables dans le cadre de la présente invention, on citera par exemple les silices précipitées hautement dispersibles (dites "HDS") « Ultrasil 7000 » et « Ultrasil 7005 » de la société Evonik, les silices « Zeosil 1165MP, 1135MP et 1115MP » de la société Rhodia, la silice « Hi-Sil EZ150G » de la société PPG, les silices « Zeopol 8715, 8745 et 8755 » de la Société Huber, les silices à haute surface spécifique telles que décrites dans la demande WO 03/16837.

Pour coupler la silice renforçante à l'élastomère diénique, on utilise de manière bien connue un agent de couplage (ou agent de liaison) au moins bifonctionnel destiné à assurer une connexion suffisante, de nature chimique et/ou physique, entre la silice (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants : WO 02/083782, WO 02/30939, WO 02/31041, WO 2007/061550, WO 2006/125532, WO 2006/125533, WO 2006/125534, US 6,849,754, WO 99/09036, WO 2006/023815, WO 2007/098080, WO 2010/072685 et WO 2008/055986.

On peut citer notamment les composés alkoxysilane-polysulfure, en particulier les polysulfures de bis-(trialkoxylsilylpropyle), tout particulièrement le disulfure de bis 3-triéthoxysilylpropyle (en abrégé "TESPD") et le tétrasulfure de bis 3-triéthoxysilylpropyle (en abrégé "TESPT"). On rappelle que le TESPD, de formule [(C₂H₅O)₃Si(CH₂)₃S]₂, est notamment commercialisé par la société Degussa sous les dénominations Si266 ou Si75 (dans le second cas, sous forme d'un mélange de disulfure (à 75% en poids) et de polysulfures). Le TESPT, de formule [(C₂H₅O)₃Si(CH₂)₃S]₂ est commercialisé notamment par la société Degussa sous la dénomination Si69 (ou X50S lorsqu'il est supporté à 50% en poids sur du noir de carbone), sous la forme d'un mélange commercial de polysulfures Sx avec une valeur moyenne pour x qui est proche de 4.

Le taux de charge renforçante dans la composition est de préférence compris dans un domaine allant de 20 à 120 pce, de préférence de 25 à 100 pce, de préférence encore de 30 à 80 pce.

### III-2-d Système de réticulation

Le système de réticulation de la composition de la portion radialement intérieure de la bande de roulement du pneumatique selon l'invention peut être à base de soufre moléculaire et/ou de donneurs de soufre et/ou de peroxyde, bien connus de l'homme du métier.

Le système de réticulation est préférentiellement un système de vulcanisation à base de soufre (soufre moléculaire et/ou agent donneur de soufre).

Le soufre est utilisé à un taux préférentiel compris entre 0,5 et 10 pce. Avantageusement, le taux de soufre est compris entre 0,5 et 2 pce, de préférence entre 0,5 et 1,5 pce, de préférence encore entre 0,5 et 1,4 pce.

La composition du flanc externe du pneumatique selon l'invention comprend avantageusement un accélérateur de vulcanisation, qui est de préférence choisi dans le groupe constitué par les accélérateurs du type thiazoles ainsi que leurs dérivés, des accélérateurs de types sulfénamides, thiourées et de leurs mélanges. Avantageusement, l'accélérateur de vulcanisation est choisi dans le groupe constitué par le disulfure de 2-mercaptobenzothiazyle (MBTS), le N-cyclohexyl-2-benzothiazyle sulfénamide (CBS), le N,N-dicyclohexyl-2-benzothiazyle sulfénamide (DCBS), le N-ter-butyl-2-benzothiazyle sulfénamide (TBBS), le N-ter-butyl-2-benzothiazyle sulfénimide (TBSI), le disulfure de morpholine, le N-morpholino-2-benzothiazyle sulfénamide (MBS), le dibutylthiourée (DBTU), et de leurs mélanges. De manière particulièrement préférée, l'accélérateur primaire de vulcanisation est le N-cyclohexyl-2-benzothiazyle sulfénamide (CBS).

Le taux d'accélérateur de vulcanisation est préférentiellement compris dans un domaine allant de 0,2 à 10 pce, de préférence de 0,5 et 2 pce, de préférence entre 0,5 et 1,5 pce, de préférence encore entre 0,5 et 1,4 pce.

De manière avantageuse, le ratio pondéral soufre ou donneur de soufre / accélérateur de vulcanisation est compris dans un domaine allant de 1,2 à 2,5 de préférence de 1,5 à 2.

### III-2-e Autres additifs possibles

Les compositions de caoutchouc de la bande de roulement du pneumatique selon l'invention peuvent comporter optionnellement également tout ou partie des additifs usuels habituellement utilisés dans les compositions d'élastomères pour pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269).

### III-3 Composition de la partie radialement extérieure de la bande de roulement

La composition de la partie radialement extérieure de la bande de roulement du pneumatique selon l'invention peut être toute composition connue de bande de roulement de pneumatique.

Selon l'invention, cette composition est différente de la composition de la partie radialement intérieure de la bande de roulement du pneumatique selon l'invention. La différence est avantageusement liée à l'absence de un sel d'un métal alcalin, alcalino-terreux ou lanthanide dans la composition de la partie radialement extérieure de la bande de roulement du pneumatique selon l'invention.

Ainsi, de préférence, la composition de la partie radialement extérieure de la bande de roulement du pneumatique selon l'invention ne comprend pas de sel d'un métal alcalin, alcalino-terreux ou lanthanide, ou en comprend moins de 0,2 pce, de préférence moins de 0,1 pce.

La composition de la partie radialement extérieure de la bande de roulement du pneumatique selon l'invention comprend avantageusement un ou plusieurs élastomères diéniques, par exemple choisi dans le groupe constitué par les polybutadiènes (BR), les polyisoprènes de synthèse (IR), le caoutchouc naturel (NR), les copolymères de butadiène, les copolymères d'isoprène et leurs mélanges. Les copolymères de butadiène sont préférentiellement choisis dans le groupe constitué par les copolymères de butadiène-styrène (SBR). Dans le cas des pneumatiques d'avion, cette composition peut comprendre exclusivement du caoutchouc naturel. Elle peut également comprendre une matrice élastomérique telle que décrite au paragraphe « matrice élastomérique » de la demande WO 2017/017123.

Elle comprend également avantageusement une ou plusieurs charges renforçantes, de préférence choisie parmi les noirs de carbones, les silices et leurs mélanges, de préférence à un taux compris dans un domaine allant de 20 à 200 pce, de préférence de 20 à 70 pce, de préférence encore de 40 à 55 pce. Dans le cas des pneumatiques d'avion, la charge renforçante de cette composition comprend de préférence majoritairement du noir de carbone.

La composition de la partie radialement extérieure de la bande de roulement du pneumatique selon l'invention comprend avantageusement un système de réticulation à base de soufre moléculaire et/ou de donneurs de soufre et/ou de peroxyde, de préférence à base de souffre moléculaire et/ou de donneurs de soufre, de préférence à un taux compris entre 0,5 et 12 pce, de préférence entre 1 et 10 pce.

Enfin, la composition de la partie radialement extérieure de la bande de roulement du pneumatique selon l'invention peut comprendre tout ou partie des additifs usuels habituellement utilisés dans les compositions d'élastomères pour pneumatique tels que ceux précédemment cités.

### III-4 Préparation des compositions de caoutchouc

La composition des parties radialement intérieure et extérieure de la bande de roulement du pneumatique selon l'invention peut être fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudé avec une autre composition de caoutchouc) sous la forme d'un semi-fini (ou profilé) de caoutchouc utilisable par exemple comme une bande de roulement de pneumatique. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, sous pression.

### V- EXEMPLES

### V-1 Mesures et tests utilisés

### Résistance à l'ozone :

Les mesures de la résistance à l'ozone ont été réalisées selon la norme ASTM D1149 - 18 sur des éprouvettes. Les éprouvettes ont été soumises à une concentration en ozone de 40 pphm (parties pour cent millions), à une température de 10°C, pendant une durée allant jusqu'à 8 jours, et à différentes extensions en statique comprise entre 5 et 50% avec un pas de 5%.

Les éprouvettes sont issues d'une plaque MFTR (appelée Monsanto) dont les deux bourrelets situés aux extrémités servent au maintien de l'éprouvette. Leurs dimensions sont les suivantes : 75mm *20mm*2.5mm.

L'aspect des éprouvettes a été noté à 48, 96 et 120 heures après exposition aux différentes élongations. Les notations sont comprises entre 0 (pas de dégradation observée) et 4 (aspect le plus dégradé). Lorsque les éprouvettes sont ruptées, la représentation est notée R.

### V-2 Préparation des compositions

Dans les exemples qui suivent, les compositions caoutchouteuses ont été réalisées comme décrit au point 111.4 ci-dessus. En particulier, la phase « non-productive » a été réalisée dans un mélangeur de 5 litres pendant 3,5 minutes, pour une vitesse moyenne de palettes de 50 tours par minutes jusqu'à atteindre une température maximale de tombée de 165°C. La phase « productive » a été réalisée dans un outil à cylindre à 23°C pendant 5 minutes.

### V-3 Essais de compositions de caoutchouc

Les exemples présentés ci-dessous ont pour objet de comparer la résistance à l'ozone d'une composition témoin T, ne comprenant pas de sel d'un métal alcalin, alcalino-terreux ou lanthanide, à deux compositions conformes à l'invention C1 et C2, comprenant un sel d'un métal alcalin, alcalino-terreux ou lanthanide à 2 ou 4 pce. Les formulations testées (en pce) sont présentées dans le Tableau 1 ci-dessous.

**Tableau 1**

| | **T** | **C1** | **C2** |
|---|---|---|---|
| NR (1) | 50 | 50 | 50 |
| SBR (2) | 50 | 50 | 50 |
| N115 (3) | 49 | 49 | 49 |
| Silice (4) | 5 | 5 | 5 |
| Sel de Mg (5) | - | 2 | 4 |
| Soufre | 1,6 | 1,6 | 1,6 |
| Accélérateur (6) | 0,85 | 0,85 | 0,85 |
| Acide stéarique (7) | 2,5 | 2,5 | 2,5 |
| ZnO (8) | 3 | 3 | 3 |
| Silane (9) | 1 | 1 | 1 |
| DPG (10) | 0,15 | 0,15 | 0,15 |
| Antioxydant (11) | 1,5 | 1,5 | 1,5 |
| Cire anti-ozone (12) | 1 | 1 | 1 |

| | | | |
|---|---|---|---|
| (1) Caoutchouc naturel (2) SBR solution fonctionnalisé étain avec 24 % de motifs polybutadiène 1,2 - 15.5 % de motifs styrène - Tg = -65°C (3) Noir de carbone de grade N115 selon la norme ASTM D-1765 (4) Silice « Zeosil 160MP » commercialisée par Rhodia (5) Acétylacétonate de magnésium « NACEM Magnésium » de la société Niho Kagaku Sangyo (6) N-cyclohexyl-2-benzothiazyle sulfénamide « Santocure CBS » de la société Flexsys (7) Stéarine « Pristerene 4931 » de la société Uniqema (8) Oxyde de zinc (grade industriel - société Umicore) (9) Silane TESPT (« Si69 » de la société Degussa) (10) Diphénylguanidine « Perkacit DPG » de la société Flexsys (11) N-1,3-diméthylbutyl-N-phénylparaphénylènediamine (Santoflex 6-PPD de la société Flexsys) (12) Cire anti-ozone « VARAZON 4959 » de la société Sasol Wax | | | |

Les résultats de résistance à l'ozone à différentes élongation (%) et après différentes périodes d'exposition (heures) sont présentés dans le Tableau 2 ci-dessous.

**Tableau 2**

| Résistance à l'ozone | **T** | **C1** | **C2** |
|---|---|---|---|
| 48 h à 10% | 1 | 0 | 0 |
| 96 h à 10% | 2 | 0 | 0 |
| 120 h à 10% | 3 | 0 | 0 |
| 48 h à 15% | 1 | 1 | 1 |
| 96 h à 15% | 3 | 2 | 1 |
| 120 h à 15% | 4 | 3 | 2 |
| 48 h à 20% | 1 | 1 | 1 |
| 96 h à 20% | 4 | 3 | 3 |
| 120 h à 20% | R | 4 | 4 |

Ces résultats montrent que l'ajout d'un sel d'un métal alcalin, alcalino-terreux ou lanthanide dans la composition permet de diminuer fortement l'apparition de fissuration. Les compositions conformes à l'invention présentent ainsi une résistance à l'ozone améliorée.

## Revendications

1. Pneumatique (1) pourvu d'une bande de roulement (2), dans lequel la bande de roulement (2) présente des sillons circonférentiels (3) ayant une profondeur P, et comprend une portion radialement extérieure (21) ayant une épaisseur E_{E} et une portion radialement intérieure (22) ayant une épaisseur E_{I}, **caractérisé en ce que** la portion radialement intérieure est constituée d'une composition à base de :
- une matrice élastomérique comprenant au moins élastomère diénique,
- de 0,2 à 10 pce d'au moins un sel d'un métal alcalin, alcalino-terreux ou lanthanide,
- au moins une charge renforçante, et
- un système de réticulation,
dans lequel la composition de la portion radialement extérieure (21) de la bande de roulement est différente de la composition de la portion radialement intérieure (22) de la bande de roulement, et
dans lequel le sel d'un métal alcalin, alcalino-terreux ou lanthanide est un acétylacétonate d'un métal alcalin, alcalino-terreux ou lanthanide.

2. Pneumatique selon la revendication 1, dans lequel la portion radialement intérieure (22) est adjacente à la portion radialement extérieure (21).

3. Pneumatique selon l'une quelconque des revendications précédentes, dans lequel l'épaisseur EE de la portion radialement extérieure (21) est strictement inférieure à P et l'épaisseur El de la portion radialement intérieure (22) étant strictement supérieure à la différence de la profondeur P par l'épaisseur EE.

4. Pneumatique selon l'une quelconque des revendications précédentes, dans lequel l'élastomère diénique est choisi dans le groupe constitué par les polybutadiènes, les polyisoprènes de synthèse, le caoutchouc naturel, les copolymères de butadiène, les copolymères d'isoprène et leurs mélanges.

5. Pneumatique selon l'une quelconque des revendications précédentes, dans lequel le sel d'un métal alcalin, alcalino-terreux ou lanthanide est un acétylacétonate de magnésium ou de néodyme, de préférence de magnésium.

6. Pneumatique selon l'une quelconque des revendications précédentes, dans lequel le taux du sel de métal alcalin, alcalino-terreux ou lanthanide dans la composition est compris dans un domaine allant de 0,5 à 5 pce, de préférence de 1 à 3 pce.

7. Pneumatique selon l'une quelconque des revendications précédentes, dans lequel la charge renforçante comprend du noir de carbone et/ou de la silice.

8. Pneumatique selon l'une quelconque des revendications précédentes, dans lequel le système de réticulation est à base de soufre moléculaire et/ou d'agent donneur de soufre.

9. Pneumatique selon l'une quelconque des revendications précédentes, ledit pneumatique étant un pneumatique d'avion.

## Patentansprüche

1. Reifen (1) mit einer Lauffläche (2), wobei die Lauffläche (2) Umfangsrillen (3) mit einer Tiefe P aufweist und einen radial äußeren Teil (21) mit einer Dicke E_{E} und einen radial inneren Teil (22) mit einer Dicke E_{I} aufweist, **dadurch gekennzeichnet, dass** der radial innere Teil aus einer Zusammensetzung auf Basis von:
- einer elastomeren Matrix, die mindestens ein Dienelastomer umfasst,
- 0,2 bis 10 phe mindestens eines Salzes eines Alkali-, Erdalkali- oder Lanthanidmetalls,
- mindestens einem Füllstoff und
- einem Vernetzungssystem
besteht,
wobei die Zusammensetzung des radial äußeren Teils (21) der Lauffläche von der Zusammensetzung des radial inneren Teils (22) der Lauffläche verschieden ist und
wobei es sich bei dem Salz eines Alkali-, Erdalkali- oder Lanthanidmetalls um ein Acetylacetonat eines Alkali-, Erdalkali- oder Lanthanidmetalls handelt.

2. Reifen nach Anspruch 1, wobei der radial innere Teil (22) dem radial äußeren Teil (21) benachbart ist.

3. Reifen nach einem der vorhergehenden Ansprüche, wobei die Dicke EE des radial äußeren Teils (21) streng kleiner als P ist und die Dicke EI des radial inneren Teils (22) streng größer als die Differenz zwischen der Tiefe P und der Dicke EE ist.

4. Reifen nach einem der vorhergehenden Ansprüche, wobei das Dienelastomer aus der Gruppe bestehend aus Polybutadienen, synthetischen Polyisoprenen, Naturkautschuk, Butadien-Copolymeren, Isopren-Copolymeren und Mischungen davon ausgewählt ist.

5. Reifen nach einem der vorhergehenden Ansprüche, wobei es sich bei dem Salz eines Alkali-, Erdalkali- oder Lanthanidmetalls um ein Acetylacetonat von Magnesium oder von Neodym, vorzugsweise von Magnesium, handelt.

6. Reifen nach einem der vorhergehenden Ansprüche, wobei der Gehalt des Alkali-, Erdalkali- oder Lanthanidmetallsalzes in der Zusammensetzung in einem Bereich von 0,5 bis 5 phe, vorzugsweise 1 bis 3 phe, liegt.

7. Reifen nach einem der vorhergehenden Ansprüche, wobei der verstärkende Füllstoff Ruß und/oder Kieselsäure umfasst.

8. Reifen nach einem der vorhergehenden Ansprüche, wobei das Vernetzungssystem auf molekularem Schwefel und/oder einem Schwefeldonor basiert.

9. Reifen nach einem der vorhergehenden Ansprüche, wobei es sich bei dem Reifen um einen Flugzeugreifen handelt.

## Claims

1. Tyre (1) provided with a tread (2), in which the tread (2) has circumferential furrows (3) having a depth P, and comprises a radially outer portion (21) having a thickness E_{E} and a radially inner portion (22) having a thickness E_{I}, **characterized in that** the radially inner portion consists of a composition based on:
- an elastomeric matrix comprising at least diene elastomer,
- from 0.2 to 10 phr of at least one salt of an alkali, alkaline-earth or lanthanide metal,
- at least one reinforcing filler, and
- a crosslinking system,
wherein the composition of the radially outer portion (21) of the tread is different from the composition of the radially inner portion (22) of the tread, and
wherein the salt of an alkali, alkaline-earth or lanthanide metal is an acetylacetonate of an alkali, alkaline-earth or lanthanide metal.

2. Tyre according to Claim 1, wherein the radially inner portion (22) is adjacent to the radially outer portion (21).

3. Tyre according to either one of the preceding claims, wherein the thickness E_{E} of the radially outer portion (21) is strictly less than P and the thickness E_{I} of the radially inner portion (22) being strictly greater than the difference between the depth P and the thickness E_{E}.

4. Tyre according to any one of the preceding claims, wherein the diene elastomer is selected from the group consisting of polybutadienes, synthetic polyisoprenes, natural rubber, butadiene copolymers, isoprene copolymers and mixtures thereof.

5. Tyre according to any one of the preceding claims, wherein the salt of an alkali, alkaline-earth or lanthanide metal is magnesium or neodymium acetylacetonate, preferably magnesium acetylacetonate.

6. Tyre according to any one of the preceding claims, wherein the content of the alkali, alkaline-earth or lanthanide metal salt in the composition is within a range extending from 0.5 to 5 phr, preferably from 1 to 3 phr.

7. Tyre according to any one of the preceding claims, wherein the reinforcing filler comprises carbon black and/or silica.

8. Tyre according to any one of the preceding claims, wherein the crosslinking system is based on molecular sulfur and/or on sulfur-donating agent.

9. Tyre according to any one of the preceding claims, said tyre being an aircraft tyre.
